Europäisches Patentamt

European Patent Office

Office européen des brevets

(11) Publication number: **0 165 940**
**B1**

## (12) EUROPEAN PATENT SPECIFICATION

(45) Date of publication of patent specification: **09.01.91**

(21) Application number: **84904318.7**

(22) Date of filing: **21.11.84**

(86) International application number:
**PCT/US84/01930**

(87) International publication number:
**WO 85/02351 06.06.85 Gazette 85/13**

(51) Int. Cl.⁵: **B 01 D 39/14**

(54) **FILTER WITH INTEGRAL STRUCTURAL FRAMEWORK.**

(30) Priority: **23.11.83 US 554828**

(43) Date of publication of application:
**02.01.86 Bulletin 86/01**

(45) Publication of the grant of the patent:
**09.01.91 Bulletin 91/02**

(84) Designated Contracting States:
**AT BE CH DE FR GB LI LU NL SE**

(56) References cited:
**DE-B-2 807 546**
**US-A-2 147 792**
**US-A-2 521 984**
**US-A-2 591 490**
**US-A-3 408 438**
**US-A-4 340 402**

(73) Proprietor: **DONALDSON COMPANY, INC.**
**1400 West 94th Street**
**Minneapolis, MN 55431 (US)**

(72) Inventor: **WYDEVEN, Robert, M.**
**3910 N. Valley View Drive**
**Eagen, MN 55121 (US)**
Inventor: **GEHL, Warren**
**6044 Portland Avenue So.**
**Minneapolis, MN 55417 (US)**

(74) Representative: **Ström, Tore et al**
**Ström & Gulliksson AB Studentgatan 1 P.O. Box 4188**
**S-203 13 Malmö (SE)**

EP 0 165 940 B1

Courier Press, Leamington Spa, England.

## Description

### Technical Field

The present invention relates to a self-supporting microfiltration air filter for computer disc drive cabinets, and a process of manufacturing the filter.

More particularly the filter of the invention is of the type having an air-impermeable structurally integral frame surrounding an active-filtering area of fibrous filter media and providing structural support for said active-filtering area, wherein the perimeter of said fibrous filter media, co-planar with said active-filtering area thereof, is solidified by the integral incorporation of impervious resin filler materials so that the fiber structure and thickness of said solidified media is substantially unaltered and undamaged by the filler material at the interface between the solidified perimeter and the active filtering area, at least one face of said solidified perimeter providing a substantially solid and impermeable surface which may be adhesively attached to a filter supporting substrate.

A filter of this type wherein the frame is liquid-impermeable is disclosed in US—A—2147792.

### Background

The advances in computer technology have required technological advances in the filters used in connection with the various components of the computers. This has been most evident with the microfilters used in disc-drive applications where it is critical to the operation of the computer that virtually no contaminants be allowed to enter the disc-drive. Generally the function of breather-type microfilters is to filter air passing through the filter as pressure differentials on opposing sides of the filter are equalized. The importance of such microfilters exists in the critical need to prevent head crashing and resulting loss of information stored in the computer's memory.

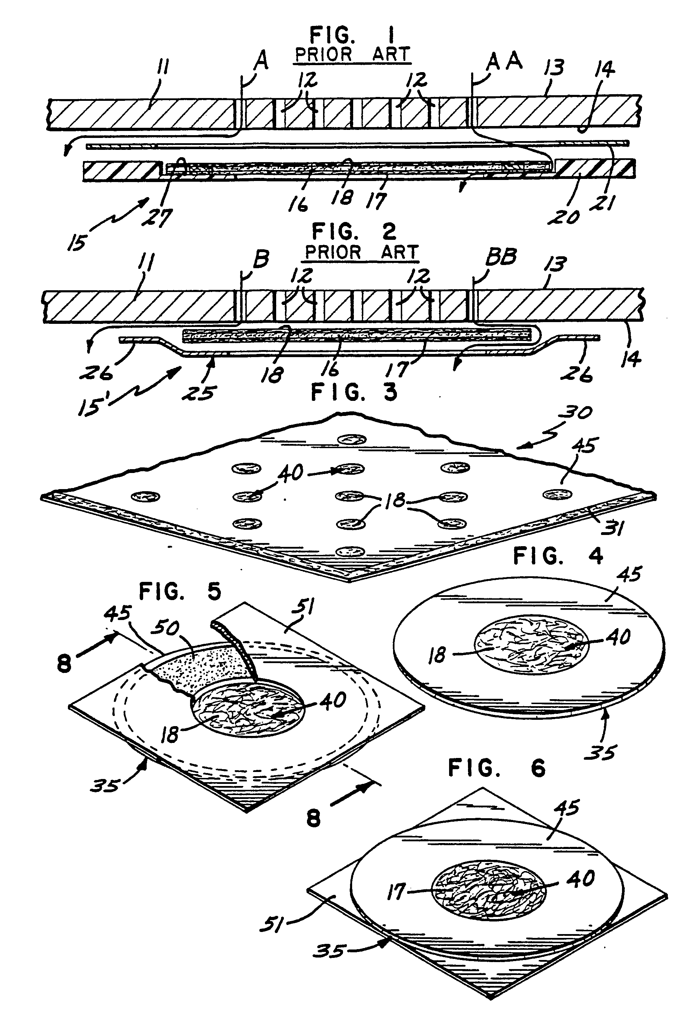

Prior art breather-type microfilters, currently available commercially, have generally been of two types. These two types are illustrated in FIGS. 1 and 2 of the drawings and will be discussed in greater detail in the description which follows. While each prior art microfilter has served its purpose, a persistent problem remains with both filters, namely the potential for un-filtered air flow to leak past the filter as a result of ineffective bonding of the filter to the mounting surface, as well as, migration of contaminants at the juncture of the media and media holder interface along and below the surface of the media into the "clean air" side of the filter. The present invention is a significant advance in the art which will substantially eliminate the potential for leakage.

Also, with the demand for more compact computers, the size of each computer component, including the microfilters, becomes a concern. Initially, the prior art microfilters were not designed for minimum size. Now they must be. The present invention addresses this requirement and provides a solution not available with the prior art.

### Summary of the Present Invention

The present invention is a filter of the type referred to above, having the characterizing features of claim 1.

The process of manufacturing the filter of the present invention includes the following steps:

(a) positioning a sheet of filter media upon a surface;

(b) masking the active-filtering area of the sheet of filter media and leaving a surrounding area of the sheet exposed;

(c) contacting the exposed media area with a liquid-phase resin filler material;

(d) applying a soruce of pressure to the filler material to force the resin filler material to penetrate and completely saturate the exposed media areas without substantially altering the thickness of the exposed media;

(e) removing the source of pressure;

(f) unmasking the masked area of the filter media; and

(g) curing the saturated exposed media area whereby the resin filler material solidifies within the fiber structure of the media and encapsulates the fibers, making the saturated media impervious to air flow and contaminants, the media area saturated with the resin filler material being structurally integral and continuous with the earlier masked active-filtering media area forming a filter which is self-supporting.

The resulting filter may then be secured to a mounting surface, e.g. a disc-drive cover plate, with only one mechanical seal between the integral framework of the filter and the impermeable mounting surface being required. Thus, where the prior art filters required two separate mechanical seals, the present invention requires only one with its integral framework serving as a media "seal".

Further, the present invention makes possible a significant reduction in the thickness of a microfilter, and the filter of the present invention is substantially uniform in thickness. In contrast, the prior art microfilters are not as "thin" as the present invention as each known prior art filter requires a structural add-on or framework which is exterior to the filter media, whereas the framework of the present invention filter is an interior part of the filter media.

These and other aspects and advantages of the present invention will be discussed further hereinafter in the detailed description which follows.

### Brief Description of the Drawings

FIG. 1 is an exploded view in cross-section of one prior art microfilter.

FIG. 2 is an exploded view in cross-section of a second prior art microfilter.

FIG. 3 is a fragmentary view in perspective of a sheet of filters manufactured in accordance with process of the present invention.

FIG. 4 is a view in perspective of a filter of the present invention.

FIG. 5 is a view in perspective of one side of a filter manufactured in accordance with the present invention.

FIG. 6 is a view in perspective of the side of the filter opposite to that shown in Fig. 5.

FIG. 7 is a plan view of a sheet of filters of the present invention and a pattern selected for cutting the filters apart from each other.

FIG. 8 is a view in cross-section of the present invention shown in FIGS. 5 and 6 as mounted to a substrate.

FIG. 9 is a schematic pictorial representation of a magnified portion of the view shown in FIG. 8.

Detailed Description of a Preferred
Embodiment of the Present Invention

In order to fully appreciate the advances made by the present invention to the state of the art, two examples of known prior art filters will first be examined before the present invention is described. Like reference numerals are used throughout the several views to indicate identical or like elements.

In FIG. 1 there is shown a solid mounting substrate 11 which typically has a plurality of openings 12 for allowing air flow to pass therethrough from an exterior side 13 of the mounting substrate 11 to an opposite interior side 14. A microfilter 15 is secured to the inside substrate surface 14, over the openings 12, to serve as a breather element for the device, e.g. computer disc-drive, and to prohibit any particulate matter from entering the disc-drive area otherwise protected from air flow. Both prior art filters shown in FIGS. 1 and 2 use conventional, laminated high-efficiency particulate air filter media (hereinafter referred to as HEPA media). The laminated or layered filter media has a center layer 16 of glass-fibers covered on both sides by a layer of lightweight, permeable polyester scrim 17, 18. The layers 17, 18 of scrim allow the media to be handled and processed without undue damage to the glass-fibers of the center layer 16. The three layers 16, 17, 18 of the filter media are typically bonded together at various ponts on the surface of the layers.

In the prior art microfilter shown in FIG. 1, the filter media is sealed or bonded to a relatively rigid holder 20. The holder 20 may be plastic and generally has a circular shape and a central, indented portion 27 for receiving the media. The media is bonded to the indented portion 27 of the holder 20. Together the holder 20 and media form a two-component filter structure 15 which is then sealed to the substrate 11 by a thin adhesive ring 21 positioned between the holder 20 and substrate surface 14. Thus, two seals are necessitated before the filter is functional in its inteded application. In FIG. 1 arrows designated by the leters A, AA show potential flow paths for unfiltered air to escape past the filter media in the event either or both of the filter's sealed areas proves ineffective. A similar potential for leakage exists with the prior art microfilter shown in FIG. 2. In this filter application the filter media is in direct contact with the surface 14 of the substrate 11 as no intevening media holder is used. To secure this type of filter 15′ to the substrate 11 a piece of adhesive tape 25 is applied to the HEPA media inward of the media perimiter and extended outward beyond the media a sufficient distance to secure the filter media when placed over the substrate openings 12. As a result, the portion 26 of the tape 25 which is not in contct with the media, instead is placed in contact with the surface 14 of the substrate 11 to secure the filter in position relative to the openings 12. Again, as with the prior art filter shown in FIG. 1, two different areas must be sealed before the filter is functional, i.e. the interface area between the filter media and the tape 25, and the interface area between the substrate surface 14 and the tape 25. These two "sealed" areas, however, are sources of potential leakage of unfiltered air flow. In FIG. 2 arrows designated by the letters B, BB indicate the possible flow paths for unfiltered air flow which might occur as a result of an ineffective bonding of either or both sealed areas in the prior art filter.

Despite the fact that the foregoing two examples are among the best breather-type filters commercially available for microfiltration in connection with applications such as computer disc-drives, the increasing demand for thinner filters with greatly reduced potential for leakage of unfiltered air flow, is high. Given the expensive nature of the device requiring the protective nature of a microfilter, such a demand is not insignificant nor ignored. Hence the development of the present invention which answers these particular needs of the industry.

With reference to FIGS, 3—9 a preferred embodiment for the present invention will be described. The media selected to illustrate this embodiment is scrimmed, layered HEPA media as described above. It will be readily appreciated, however, that the invention is applicable to other types of media, including non-scrimmed HEPA media, synthetic as well as natural fiber media, and media of various efficiency levels for applications other than breather-type filter applications.

The objectives of the present invention include (1) a significant reduction in the potential for unfiltered air flow to leak past the filter media and (2) a significant reduction in filter thickness. These objectives are accomplished by the process for manufacturing the invention.

A preferred mechanism for practicing the process for manufacturing the filter of the present invention is a combination of silk-screen printing and laser-cutting technology. In FIG. 3 a portion of a silk-screen sheet 30 of multiple filters is illustrated as would apear before a laser is used to cut the sheet into individual filters 35 like that shown in FIG. 4. To achieve the filter end product the following steps are taken with respect to the silk-screen/laser mechanism:

(1) A sheet of scrimmed HEPA media is placed on a stationary, generally impermeable, mounting surface. The sheet is suitably secured, e.g. with tape, to prevent any shifting of the sheet during the process.

(2) A fine mesh, woven screen is then placed on the sheet, in contact with one surface of the media. The screen is earlier prepared such that portions of the screen are made impervious to fluid and air. The impervious portions overlie those portions of the media sheet which are selected to be active filtering media for the end filter procuct. The impervious portions of the screen mask the underlying portions of the media during the process.

(3) After the screen is positioned in place on top of the media, a filler material, preferably a latex resin, either an emulsion or suspension in liquid-phase, is applied on top of the screen.

(4) Mechanical force is then applied to the resin by using a conventional squeegee device. As the squeegee is passed over the screen, the blade of the squeegee forces resin downwardly through the openings in the screen and into the media therebelow.

(5) The amount of resin forced into the media is metered by the selected number of passes which are made over the screen with the squeegee device. With each pass an additional amount of resin is applied to the screen.

(6) The amount of resin forced into the media is equivalent to that determined necessary to completely saturate the media to at least to more than half the thickness of the media, and preferably through the entire thickness of the media.

(7) In the preferred embodiment each side or face surface of the sheet of media is subjected to the forced penetration of liquid-phase resin in order to insure full-penetration of the resin throughout the portions of the media which are not masked.

(8) When one side or surface of the media has been adequately penetrated and saturated with resin, the screen is removed and the saturated sheet of media is allowed to dry. The process is then repeated for the reverse side of the sheet. The selection of a symmetrical arrangement of masked portions allows alignment of respective masked portions on both side of the media sheet. Thus, the cured sheet of media shown in FIG. 3 would appear identical on its reverse side.

(9) After step (8), the resin is allowed to cure and, together with the encapsulated media fibers, the cured resin forms a structural framework 45 for the filter product.

(10) The amount of resin applied to the second side of the media sheet is that amont necessary to fully penetrate and saturate the depth of media untouched by application of resin to the first side of the media. A process of trial and error is used to determine the number of passes necessary to achieve one hundred percent saturation of the unmasked portions of the media. To verify that full penetration has been achieved the media is inspected to determine if delamination of the media layers is possible. If delamination is not possible then full penetration and complete saturation has been accomplished. Air impermeability off the resin-saturated portion of the resulting sheet of multiple filters may be further verified using an industry standard air permeability tester.

(11) Depending on the type of resin selected, the curing steps of the process may require exposing the media to a source of heat for a period of time to insure the resin is cured to a degree where it will not redisperse.

(12) When the resin in the media is cured such that it is immobilized and solidified the sheet is then ready to be cut into a number of separate filters.

(13) In the present invention a computer-controlled laser-beam is used to cut and fuse the cut edges of each filter from the media sheet. The laser technology used in the preferred embodiment is state-of-the art technology available commercially, e.g. in the preferred embodiment laser technology available from Laserdyne, Inc. a division of Data Card Corporation, was selected.

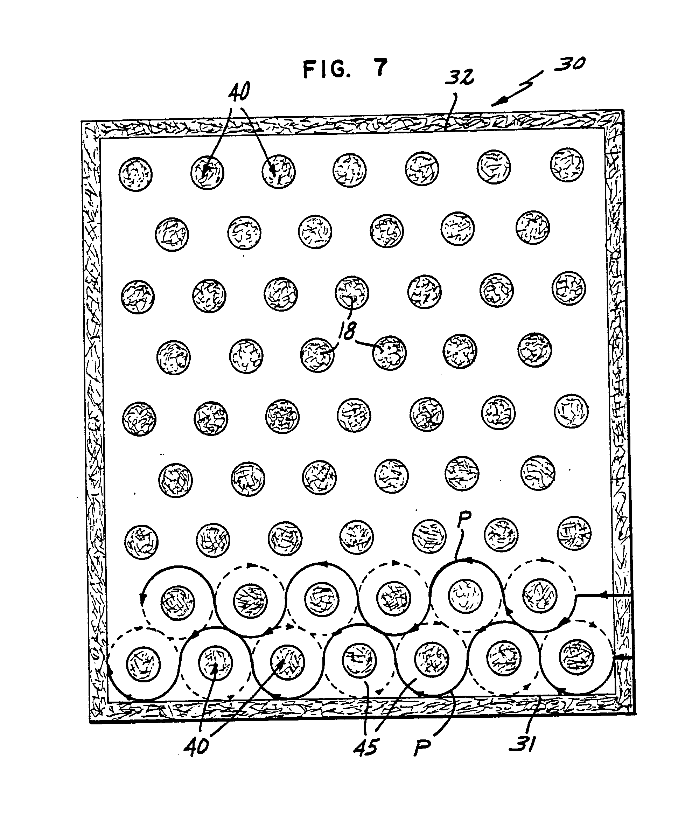

(14) With reference to FIG. 7, the cured sheet of media is placed on a stationary table. The computer of the laser machine is pre-programmed to move the laser beam through a selected pattern. In the preferred embodiment, the masked portions of the media are circular in shape and have been spaced apart from each other in rows which are offset with respect to adjacent rows on either side thereof. With this arrangement circular shaped filters are then cut. The pattern for this embodiment is essentially a serpentine line following a sine-wave pattern as reprsented by arrows P in FIG. 7. The laser beam is passed in this pattern from one edge 31 to the opposing edge 32 of the sheet moving from row to row until the entire sheet has been cut. The end result is a number of mass-produced indentical circular filters of type illustrated in Fig. 4.

(15) The final step in the process is the application of a pliable adhesive ring 50 to one side of the filter. The adhesive selected must be compatible with the resin used in the filter product to insure adequate adherence for the life of the filter. The ring 50 is adhesive on both sides. A silicone-treated release paper 51 is placed over one side of the ring for shipping and handling purposes. When mounting the filter in its intended application the release paper 51 is removed from the adhesive ring 50, exposing the adhesive for contact with a substrate surface, e.g. a cover plate for a computer disc-drive.

Of course, persons skilled in the art will appreciate that other mechanisms may be used to practice the present invention. For example, a jig (not shown) could be constructed where the media is placed between a combination of stationary members which serve to mask selected areas of the media and contain the filler material therebetween, and movable arms arranged relative to the stationary members to force the filler material into the fiber structure of the media. A number of variations for this type of mechanism are possible and the invention is thus not believed limited to any particular arrangement. An important feature of the present invention is that regardless of the particular mechanism selected to practice the manufacturing process, the process steps essential to the invention remain the same, i.e.: (a) the use of a sheet of filter media: (b) masking selected portions of the media sheet in order to provide an active filtering media area for the filter end-product; (c) placing a liquid-phase filler material in contact with the remaining exposed media areas; (d) applying sufficient pressure to the filler material in order to force the material into the media to the degree necessary to fully saturate the media and (e) after achieving complete saturation of the unmasked portions, removing the source of pressure and allowing the filler material to solidify. The individual filters may then be cut apart from each other. The end product is the filter of the present invention, namely, a filter having a self-supporting framework which is not only continuous with the active filtering media area, but is structurally integral with the media and which seals that portion of the media containing the filler material so as to be impermeable to air flow and contaminants.

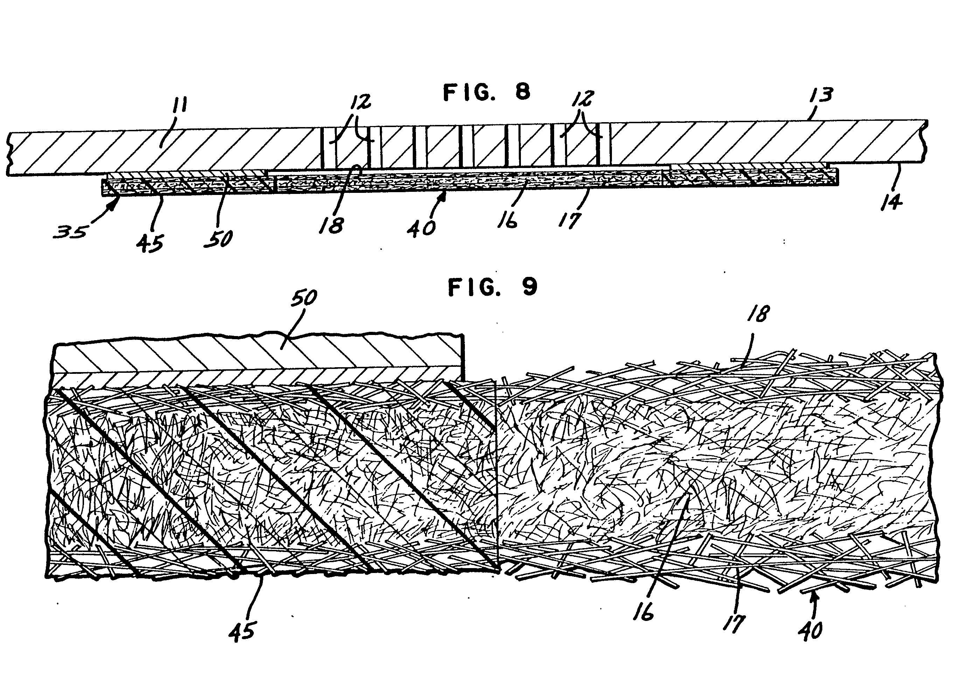

From an examination of FIGS. 8 and 9, the superior and novel features of the present invention over the prior art can be appreciated. In FIG. 8 a cross-sectional view of the present invention may be compared with the exploded cross-sectional views of the two prior art filters shown in FIGS. 1 and 2. The single-piece construction of the present invention is unique from the two-piece constructions of both prior art filters. The diffusion of the filler material through the fiber structure of the media, accomplished without damage to the fibers and without material change in the thickness of the media, results in a filter which is substantially uniform in thickness having portions of media containing filler material which are impervious. The resulting filter thickness is substantially equivalent to the thickness of the media itself. In contrast the thickness of the prior art filter in FIG. 1 includes not only the thickness of the media but that of the holder 20 as well. Similarly, the thickness of the prior art filter shown in FIG. 2 is a "double" nature as its two-part construction creates an additional area for leakage of unfiltered air which is not found in the present invention.

A major difference between the present invention and the prior art filters is the elimination of one of two potential seal leakage areas. This is accomplished by eliminating the need to mechanically bond the filter media to any holder 20 or adhesive tape 25 in order to provide the media structural integrity. The filter of the present invention requires only one mechanical seal between its structurally integral framework 45 and the substrate mounting surface 14. In FIG. 9 the magnified cross-sectional view shows portions of both the active filtering media area 40 and the air-impermeable framwork area 45 of the filter. It can be seen in FIG. 9 that the adhesive of the strip 50 will encapsulate any fibers extending from the framework 45 and fill any voids which might otherwise exist in the interface between the adhesive ring 50 and the surface of the framework 45 to which the strip is adhered. This interface area is illustrated by the contrasting crosshatched region of the adhesive ring 50. For unfiltered air to leak past the filter there must be an ineffective seal between the filter framework 45 and the substrate 11 as the resin-filled media framework 45 itself is completely impermeable to air. Thus, a significant reduction in leakage potential is achieved by the present invention over the prior art in that the greatest potential for leakage is eliminated when it is not necessary to interface the air permeable media with an adhesive or an exterior holder.

Other advantages of the present invention over the prior art include the ability of the invention to survive the handling necessary to properly position the filter over the substrate openings. The unique construction of the present invention eliminates the possibility of the media delaminating when the filter is flexed while positioning it over the substrate openings 12. This is because the flexible resin/fiber framework 45 is integral with the media itself. This is not true of the prior art filters where even minimal handling, such as that necessary to merely position the filter accurately over the substrate openings, may cause delamination of the filter's component layers and shedding of potentially damaging particles. With the present invention's framwork 45 a flexibility and durability is provided which allows tremendously more handling to be possible when mounting the filter than could ever be hoped for with the prior art filters.

Furthermore the present invention may be mass-produced as described above. This results in a significant commercial advantage over the prior art filters which typically are produced individually in step-by-step mechanical processes. Further, the use of laser technology to separate or cut the mass-produced filters apart from each provides another major advantage. Also, the "free" or cut peripheral edges of the filter media are encapsulated in the flexible resin framework thus minimizing any shedding of glass-fibers from the cut edges as compared to prior art filters where is is possible for fibers to be freed in the mounting process and potentially cause damage.

From the foregoing it will be appreciated that a variety of resins, including thermosetting and thermoplastic resin may be used as the filter material. Such may include hot melt plastics, urethanes, plastisols, epoxies, phenolic and ultraviolet (U.V.) cured resins, waxes, rubber-latex resins, etc. Such materials may also be selected from two-part resins. The process for manufacture would be modified accordingly as dictated by the type of resin selected in order to obtain the required liquid-phase and curing aspects for the particular material. Because of the variety of possible filler materials, the integral framwork can be made pliable or rigid to varying degrees. Also the resin and hence the saturated media may be tinted in a variety of colors and textures to aid quality control measures, e.g., such as verifying alignment of the saturation pattern on both faces of the media with respect to each other, and aid in verifying full resin penetration. Furthermore, the filter may be finished, without or with surface tack adhesion as an inherent property of the filler-resin material or by a separate silk-screening step of applying an adhesive film or material to the surface of the resin framework portion of the filter sheet. These options may be used in lieu of applying a separate adhesive ring 50 to the filter as described above.

## Claims

1. A self-supporting microfiltration air filter for computer disc drive cabinets, having an air-impermeable structurally integral frame surrounding an active-filtering area of fibrous filter media and providing structural support for said active-filtering area, wherein the perimeter of said fibrous filter media co-planar with said active-filtering area thereof, is solidified by the integral incorporation of impervious resin filler materials so that the fiber structure and thickness of said solidified media is substantially unaltered and undamaged by the filler material at the interface between the solidified perimeter and the active-filtering area, at least one face of said solidified perimeter providing a substantially solid and impermeable surface which may be adhesively attached to a filter supporting substrate, characterized in that the fibrous media filter material is a glass fiber, high-efficiency particulate air (HEPA) media, and that the impervious resin filler material is a thermoplastic or thermosetting resin.

2. A process of manufacturing the self-supporting microfiltration air filter according to claim 1 comprising the steps of:

(a) positioning a sheet of fibrous filter media upon a surface;

(b) masking the active-filtering area of the sheet of filter media and leaving a surrounding area of the sheet exposed;

(c) contacting the exposed media area with a liquid-phase resin filler material;

(d) applying a soruce of pressure to the filler material to force the resin filler material to penetrate and completely saturate the exposed media areas without substantially altering the thickness of the exposed media;

(e) removing the source of pressure;

(f) unmasking the masked area of the filter media; and

(g) curing the saturated exposed media area whereby the resin filler material solidifies within the fiber structure of the media and encapsulates the fibers, making the saturated media impervious to air flow and contaminants, the media area saturated with the resin filler material being structurally integral and continuous with the earlier masked active-filtering media area forming a filter which is self-supporting.

3. The process of claim 2 wherein step (b) of the process further includes overlaying the sheet of media with an open woven-mesh screen having portions which are fluid impervious, said fluid impervious portions masking said active-filtering area of the sheet of filter media, with the remaining open, woven mesh of the screen overlying the remaining exposed surrounding area of the sheet of media.

4. The process of claim 3 wherein step (d) of the process further includes passing a device over the screen in a manner which forces the resin filler material ahead of the device, downwardly through the mesh of the screen and into the unmasked portion of the media therebelow.

5. The process of claim 2 wherein the process further includes a step (h), subsequent to step (g), of cutting around the perimeter of the cured sheet media area to form a desired filter shape.

6. The process of claim 5, wherein step (h) of the process further includes using a laser beam to effect the cutting of the cured media.

## Patentansprüche

1. Selbsttragendes Mikrofiltrier-Luftfilter für Rechner-Plattenlaufwerksschränke, mit einem luftundurchlässigen, strukturell einheitlichen oder einstückigen Rahmen, der einen Aktivfilterbereich eines faserigen Filtermediums umgibt und dem Aktivfilterbereich strukturelle Unterstützung bietet, wobei der in der gleichen Ebene wie sein Aktivfilterbereich liegende Umfang des faserigen Filtermediums durch einheitliche Einverleibung von undurchlässigen Harzfüllstoffen verfestigt ist, so daß Faserstruktur und Dicke des verfestigten Mediums durch den Füllstoff an der Grenzfläche zwischen dem verfestigten Umfang und dem Aktivfilterbereich im wesentlichen unverändert und unbeschädigt sind, und wobei mindestens eine Fläche des verfestigten Umfangs eine im wesentlichen massive und undurchlässige Oberfläche darstellt, die an einem das Filter tragenden Substrat klebend anbringbar ist, dadurch gekennzeichnet, daß das faserige Filtermediummaterial aus einem hohe Leistungsfähigkeit aufweisenden teilchenförmigen Glasfaser-Luftfiltermedium (HEPA-Medium) besteht und daß der undurchlässige Harzfüllstoff aus einem thermoplastischen oder wärmehärtenden Harz besteht.

2. Verfahren zur Herstellung des selbsttragenden Mikrofiltrier-Luftfilters nach Anspruch 1, gekennzeichnet durch folgende Schritte:

(a) Positionieren einer Lage eines faserigen Filtermediums auf einer Oberfläche,

(b) Maskieren der Aktivfilterfläche der Lage des Filtermediums, wobei ein umgebender Bereich der Lage unbedeckt bleibt,

(c) Inberührungbringen des unbedeckten Mediumbereichs mit einem in flüssiger Phase vorliegenden Harzfüllstoff,

(d) Druckbeaufschlagung des Füllstoffs, um den Harzfüllstoff zwangsweise die unbedeckten Mediumbereich durchdringen und vollständig sättigen zu lassen, ohne die Dicke des unbedeckten Mediumbereichs wesentlich zu verändern,

(e) Beendigung der Druckbeaufschlagung,

(f) Entfernen der Maske vom maskierten Bereich des Filtermediums und

(g) Aushärten des gesättigten, unbedeckten Mediumbereichs, so daß sich der Harzfüllstoff in der Faserstruktur des Mediums verfestigt und die Fasern einkapselt und das gesättigte Medium für Luftstrom und Verunreinigungen undurchlassig wird, wobei der mit dem Harzfüllstoff gesättigte Mediumbereich mit dem vorher maskierten Aktivfilterbereich strukturell einheitlich und zusammenhängend (ausgebildet) ist und ein selbsttragendes Filter bildet.

3. Verfahren nach Anspruch 2, dadurch gekennzeichnet, daß im Schritt (b) weiterhin die Lage des Filtermediums mit einem fluidumundurchlässige Abschnitte aufweisenden offenmaschigen gewebten Sieb belegt wird, wobei die fluidumundurchlässigen Abschnitte den Aktivfilterbereich der Lage des Filtermediums maskieren, während das restliche offenmaschige gewebte Sieb über dem restlichen un bedeckten, umgebenden Bereich der Lage des Mediums liegt.

4. Verfahren nach Anspruch 3, dadurch gekennzeichnet, daß im Schritt (d) weiterhin eine Vorrichtung über das Sieb in der Weise geführt wird, daß der vor der Vorrichtung befindliche Harzfüllstoff durch die Maschen des Siebs abwärts in den unmaskierten Abschnitt des darunter liegenden Mediums gepreßt wird.

5. Verfahren nach Anspruch 2, dadurch gekennzeichnet, daß in einem auf den Schritt (g) folgenden Schritt (h) ein Schnitt um den Umfang des ausgehärteten Lagen-Medium-bereichs zur Festlegung einer gewünschten Filterform geführt wird.

6. Verfahren nach Anspruch 5, dadurch gekennzeichnet, daß im Schritt (h) ein Laserstrahl zum Schneiden des ausgehärteten Mediums benutzt wird.

## Revendications

1. Filtre à air auto-porteur pour microfiltration destiné à des armoires d'unités de disques d'ordinateur, ayant un châssis structurellement intégral, imperméable à l'air, entourant une zone de filtrage actif d'un milieu fibreux filtrant et fournissant un support structurel pour la zone de filtrage actif, où le périmètre du milieu fibreux filtrant, dans le même plan que sa zone de filtrage actif, est solidifié par l'incorporation intégrale de charges en résine imperméable de sorte que la structure des fibres et l'épaisseur du milieu solidifié ne sont pas sensiblement altérées et endommagées par la charge à l'interface entre le périmètre solidifié et la zone de filtrage actif, au moins une face du périmètre solidifié fournissant une surface sensiblement solide et imperméable qui peut être fixée par adhésif à un substrat de support du filtre, caractérisé en ce que le matériau filtrant du milieu fibreux est un milieu en fibres de verre, imperméable à l'air, particulaire, de haute efficacité (HEPA), et en ce que la charge ein résine imperméable est une résine thermoplastique ou thermodurcissable.

2. Procédé de fabrication du filtre à air pour microfiltration, auto-porteur, selon la revendication 1, comprenant les étapes consistant à:

(a) placer une feuille de milieu fibreux filtrant sur une surface;

(b) masquer la zone de filtrage actif de la feuille de milieu filtrant et laisser une surface environnante de la feuille à l'état exposé;

(c) mettre en contact la surface exposée du milieu avec une charge en résine à phase liquide;

(d) appliquer une source de pression à la charge pour amener la charge en résine à pénétrer et à saturer complètement les zones exposées du milieu sans sensiblement altérer l'épaisseur du milieu exposé;

(e) enlever la source de pression;

(f) cesser de masquer la zone masquée du milieu filtrant; et

(g) durcir la zone exposée, saturée, du milieu, d'où il résulte que la charge en résine se solidifie à l'intérieur de la structure des fibres du milieu et enrobe les fibres, rendant le milieu saturé imperméable à la circulation de l'air et aux agents de contamination, la surface du milieu saturée avec la charge de résine étant structurellement en une pièce et continue avec la zone du milieu de filtrage actif, masquée antérieurement, formant un filtre qui est auto-porteur.

3. Procédé selon la revendication 2, dans lequel l'étape (b) du procédé comprend en oute l'étape consistant à recouvrir la feuille du milieu avec un tamis tissé à maille ouverte ayant des parties qui sont imperméables aux fluides, les parties imperméables aux fluides masquant la zone de filtrage actif de la feuille du milieu filtrant, avec les mailles du tamis tissé, ouvertes, restantes recouvrant la zone environnante, exposée, restante, de la feuille de milieu.

4. Procédé selon la revendication 3 dans lequel l'étape (d) du procédé comprend en outre l'étape consistant à faire passer un dispositif sur le tamis d'un façon telle qu'il entraîne la charge de résine située en tête du dispositif, dans la direction du bas pour qu'elle traverse les mailles du tamis et entre dans la partie non-masquée du milieu se trouvant au-dessous.

5. Procédé selon la revendication 2, dans lequel le procédé comprend une étape (h), suivant l'étape (g), consistant à découper le périmètre de la zone du milieu durci en feuille de manière a obtenir la forme désirée pour le filtre.

6. Procédé selon la revendication 5, dans lequel l'étape (h) du procédé comprend en outre l'étape consistant à utiliser un faisceau laser pour effectuer la découpe du milieu durci.

EP 0 165 940 B1

FIG. 1
PRIOR ART

FIG. 2
PRIOR ART

FIG. 3

FIG. 4

FIG. 5

FIG. 6

1

EP 0 165 940 B1

FIG. 7

FIG. 8

FIG. 9

EP 0 165 940 B1